# EUROPEAN PATENT APPLICATION

(11) **EP 3 056 436 A1**
(43) Date of publication of application: **17.08.2016**
(21) Application number: 16155739.2
(22) Date of filing: 15.02.2016
(51) Int. Cl.: B64F 5/00, G06Q 10/00, G07C 5/00

(54) **NETWORK-BASED COMPUTING DEVICE AND METHOD FOR INTERACTIVE AIRCRAFT MAINTENANCE PROCEDURES**

(30) Priority: 16.02.2015 US 201514623381
(71) Applicant: United Technologies Corporation, Farmington, CT 06032 (US)
(72) Inventor: KAVALKOVICH, W. Dean, Cobalt, CT Connecticut 06414 (US); NAPLES, Wendy, Simsbury, CT Connecticut 06070 (US); SCHEID, Paul Raymond, West Hartford, CT Connecticut 06107 (US)
(74) Representative: Hall, Matthew Benjamin

(57) **Abstract**

A method and system for interactive aircraft maintenance procedures using a computer device is disclosed. The method comprises receiving an aircraft component operation request from a computing device, transmitting the aircraft component operation request to one or more aircraft components, receiving one or more aircraft component values based on the transmitting step, generating an aircraft status determination based on the receiving step at the computing device.

## Description

### BACKGROUND

This disclosure relates generally to network-based computing devices for interactive aircraft maintenance procedures and methods for using the same.

Today, interactive ground operations for an aircraft require an extensive manual effort. An interactive engine test, such as, for example, a power assurance check, requires an operator to look up information in tables, start the engine manually, adjust the throttle manually, perform engine sensor readings manually, and then make hand calculations to determine if an issue exists. This manual process is inefficient from a time perspective and may lead to human error.

Accordingly, there exists a need for improvements in aircraft maintenance procedures.

### SUMMARY

In at least one embodiment, a method for interactive aircraft maintenance procedures comprises receiving an aircraft component operation request from a computing device, transmitting the aircraft component operation request to one or more aircraft components, receiving one or more aircraft component values based on the transmitting step, generating an aircraft status determination based on the receiving step at the computing device.

In at least one embodiment, the transmitting step is performed by a management system connected to the computing device via a wireless network.

In at least one embodiment, the aircraft status determination is further based on one or more known values.

In at least one embodiment, the aircraft status determination is further based on one or more acceptable value limits for the one or more aircraft component values.

In at least one embodiment, the method further comprising generating one or more derived attributes based at least in part on the one or more aircraft component values and one or more known values.

In at least one embodiment, the aircraft status determination is further based on the one or more derived attributes.

In at least one embodiment, a method for interactive aircraft maintenance procedures, comprises transmitting, from a computing device at a point of work, an aircraft component operation request to a management system, verifying the component at the point of work using the computing device, wherein the management system on the aircraft sends information to the computing device from the component and the verifying is based on the information.

In at least one embodiment, the verifying comprises viewing reports about the aircraft component displayed on the computing device.

In at least one embodiment, the verifying comprises combining the information with one or more known values at the computing device.

In at least one embodiment, the verifying further comprises assessing the information and the one or more known values against at least one minimum acceptable value.

In at least one embodiment, the computing device and the management stem communicate over a computer network.

In at least one embodiment, the computer network is a wireless network.

In at least one embodiment, the component is a plurality of components.

In at least one embodiment, an interactive aircraft component maintenance system comprises a computing device, a management system configured to receive an aircraft component operation request from the computing device, at least one aircraft component configured to receive the aircraft component operation request from the management device and transmit one or more values associated with the at least one aircraft component to the management system.

In at least one embodiment, the management system is further configured to transmit the one or more values to the computing device.

In at least one embodiment, the computing device is further configured to generate an aircraft component status determination based at least in part on the one or more values.

In at least one embodiment, the computing device is further configured to generate the aircraft component status determination based at least in part on one or more known values.

In at least one embodiment, the management system and the computing device communicate over a computer network.

In at least one embodiment, the computer network is a wireless network.

According to one aspect of the present disclosure, there is provided a method for interactive aircraft maintenance procedures, comprising: receiving an aircraft component operation request from a computing device; transmitting the aircraft component operation request to one or more aircraft components; operating the one or more aircraft components in response to the transmitted aircraft component operation request; receiving one or more aircraft component values in response to the operating step; and generating at the computing device an aircraft status determination based on the received one or more aircraft component values.

In addition to one or more of the features described above, or as an alternative to any of the foregoing embodiments, the transmitting step may be performed by a management system connected to the computing device via a wireless network.

In addition to one or more of the features described above, or as an alternative to any of the foregoing embodiments, the aircraft status determination may be further based on one or more known values.

In addition to one or more of the features described above, or as an alternative to any of the foregoing embodiments, the aircraft status determination may be further based on one or more acceptable value limits for the one or more aircraft component values.

In addition to one or more of the features described above, or as an alternative to any of the foregoing embodiments, the method may further comprise generating one or more derived attributes based at least in part on the one or more aircraft component values and one or more known values.

In addition to one or more of the features described above, or as an alternative to any of the foregoing embodiments, the aircraft status determination may be further based on the one or more derived attributes.

According to another aspect of the present disclosure, there is provided a method for interactive aircraft maintenance procedures, comprising: transmitting, from a computing device at a point of work, an aircraft component operation request to a management system on an aircraft; operating one or more aircraft components in response to the transmitted aircraft component operation request; and verifying the one or more aircraft components at the point of work using the computing device, wherein the management system on the aircraft sends information received from the one or more aircraft components to the computing device and the verifying is based on the information.

In addition to one or more of the features described above, or as an alternative to any of the foregoing embodiments, the verifying may comprise viewing reports about the one or more aircraft components displayed on the computing device.

In addition to one or more of the features described above, or as an alternative to any of the foregoing embodiments, the verifying may comprise combining the information with one or more known values at the computing device.

In addition to one or more of the features described above, or as an alternative to any of the foregoing embodiments, the verifying may further comprise assessing the information and the one or more known values against at least one acceptable value limit.

In addition to one or more of the features described above, or as an alternative to any of the foregoing embodiments, the computing device and the management system may communicate over a computer network.

In addition to one or more of the features described above, or as an alternative to any of the foregoing embodiments, the computer network may be a wireless network.

In addition to one or more of the features described above, or as an alternative to any of the foregoing embodiments, the one or more aircraft components may comprise a plurality of aircraft components.

According to another aspect of the present disclosure, there is provided an interactive aircraft component maintenance system, comprising: a computing device; a management system configured to: receive an aircraft component operation request from the computing device; transmit an operation request to at least one aircraft component; and receive one or more values associated with the at least one aircraft component to the management system.

In addition to one or more of the features described above, or as an alternative to any of the foregoing embodiments, the management system may be further configured to transmit the one or more values to the computing device.

In addition to one or more of the features described above, or as an alternative to any of the foregoing embodiments, the computing device may be further configured to generate an aircraft component status determination based at least in part on the one or more values.

In addition to one or more of the features described above, or as an alternative to any of the foregoing embodiments, the computing device may be further configured to generate the aircraft component status determination based at least in part on one or more known values.

In addition to one or more of the features described above, or as an alternative to any of the foregoing embodiments, the management system and the computing device may communicate over a computer network.

In addition to one or more of the features described above, or as an alternative to any of the foregoing embodiments, the computer network may be a wireless network.

These and other features of the example disclosure can be best understood from the following specification and drawings, the following of which is a brief description:

### BRIEF DESCRIPTION OF THE DRAWINGS

Figure 1A is an architecture diagram displaying components of a system for execution for performance of interactive aircraft maintenance procedures with a network-based computing device according to at least one exemplary embodiment.
Figure IB is an architecture diagram displaying components of a system for execution for performance of interactive aircraft maintenance procedures with a network-based computing device according to at least one embodiment.
Figure 1C is an architecture diagram displaying components of a system for execution for performance of interactive aircraft maintenance procedures with a network-based computing device according to at least one embodiment.
Figure 2 shows a flowchart of an example method of performing interactive aircraft maintenance procedures with a network-based computing device according to at least one embodiment.

### DETAILED DESCRIPTION

For the purposes of promoting an understanding of the principles, reference will now be made to the embodiments illustrated in the drawings, and specific language will be used to describe the same. It will nevertheless be understood that no limitation of the scope of this disclosure is thereby intended.

This detailed description is presented in terms of programs, data structures or procedures executed on a computer or network of computers. The software programs implemented by the system (i.e. on the computing device and/or aircraft module) may be written in any programming language - interpreted, compiled, or otherwise. These languages may include, but are not limited to, PHP, ASP.net, HTML, HTML5, Ruby, Perl, Java, Python, C++, C#, JavaScript, and/or the Go programming language. It should be appreciated, of course, that one of ordinary skill in the art will appreciate that other languages may be used instead, or in combination with the foregoing and that web and/or mobile application frameworks may also be used, such as, for example, Ruby on Rails, Node.js, Zend, Symfony, Revel, Django, Struts, Spring, Play, Jo, Twitter Bootstrap and others.

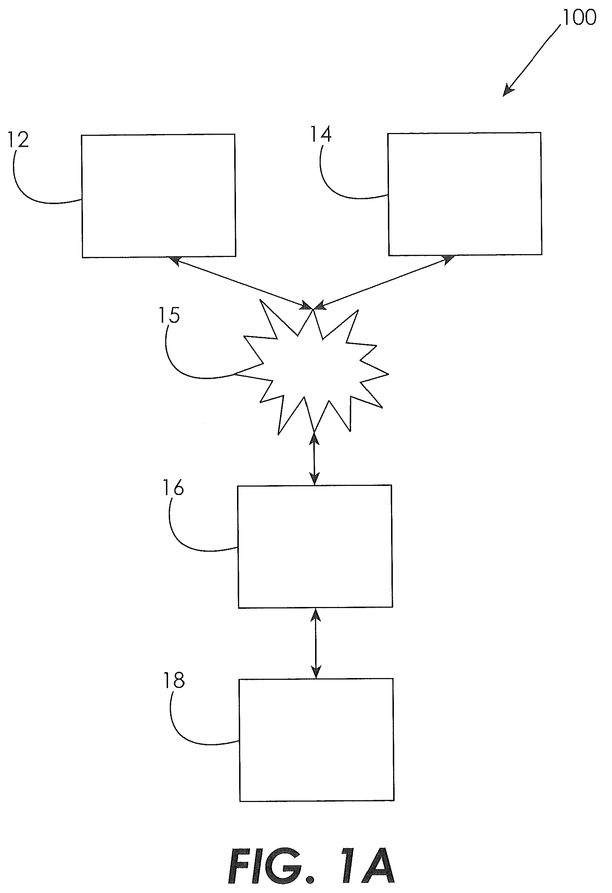

Referring now to Figure 1A, there is shown an architecture diagram detailing components of a system 100 for interactive aircraft maintenance procedures with a computing device according to at least one embodiment. As shown in Figure 1A, the system 100 includes one or more aircraft components 12, 14, a computer network 15, a management system 16, and a computing device 18. For purposes of clarity, only one computing device 18 is shown in Figure 1A, however, the system 100 may include any number of computing devices 18. In addition, for clarity, only two aircraft components 12, 14 are shown in Figure 1A, however , the system 100 many include any number (including one) aircraft components 12, 14.

Computing device 18 may be configured to transmit information to and generally interact with management system 16. As shown in Figure 1A, management system 16 may be directly connected to the computing device 18, such as, for example, through a serial connection. It should further be appreciated that management system 16 and computing device 18 may reside on a computer network (not shown) to enable connectivity, such as, for example, a wireless network. Computing device 18 may include a web browser, mobile application, socket or tunnel, or other network connected software such that communication with management system 16 is possible.

Computing device 18 includes one or more computers, smartphones, tablets, wearable technology, computing devices, or systems of a type well known in the art, such as a mainframe computer, workstation, personal computer, laptop computer, hand-held computer, cellular telephone, or personal digital assistant. Computing device 18 comprises such software, hardware, and componentry as would occur to one of skill in the art, such as, for example, one or more microprocessors, memory systems, input/output devices, device controllers, and the like. Computing device 18 also comprises one or more data entry means (not shown in FIG. 1A) operable by users of computing device 18 for data entry, such as, for example, voice or audio control, a pointing device (such as a mouse), keyboard, touchscreen, microphone, voice recognition, and/or other data entry means known in the art. Computing device 18 also comprises a display means (not shown in FIG. 1A) which may comprise various types of known displays such as a liquid crystal display, a light emitting diode display, and the like upon which information may be display in a manner perceptible to the user.

As described above, management system 16 may be configured to receive authentication information, communications, and other information from the computing device 18. In at least one embodiment, management system 16 communicates with one or more of the aircraft components 12, 14 over computer network 15.

Computing device 18 is further configured to provide input to the management system 16 to carry out one or more of the steps of the methods described herein. Management system 16 comprises one or more server computers, computing devices, or systems of a type known in the art. Management system 16 may be embedded within existing aircraft technology to provide a network access point for communication by computing device 18. Management system 16 may comprise one of many well-known servers and/or platforms, or a custom server or platform.

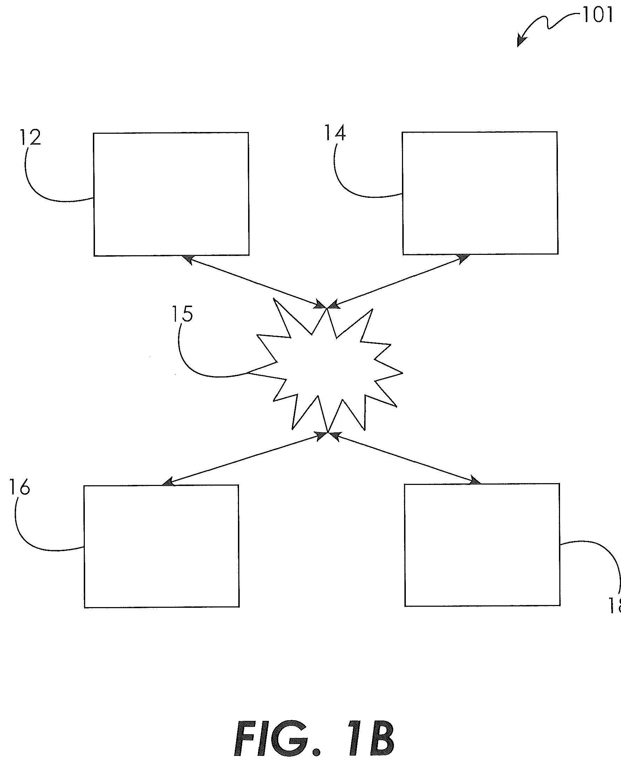

In some embodiments, computing device 18, management system 16, and the one or more aircraft components 12, 14 all communicate over a single computer network 15, such as, for example, the embodiment displayed in Figure 1B. In such an embodiment, computer network 15 may be a wireless network, virtual private network, or any other type of computer network.

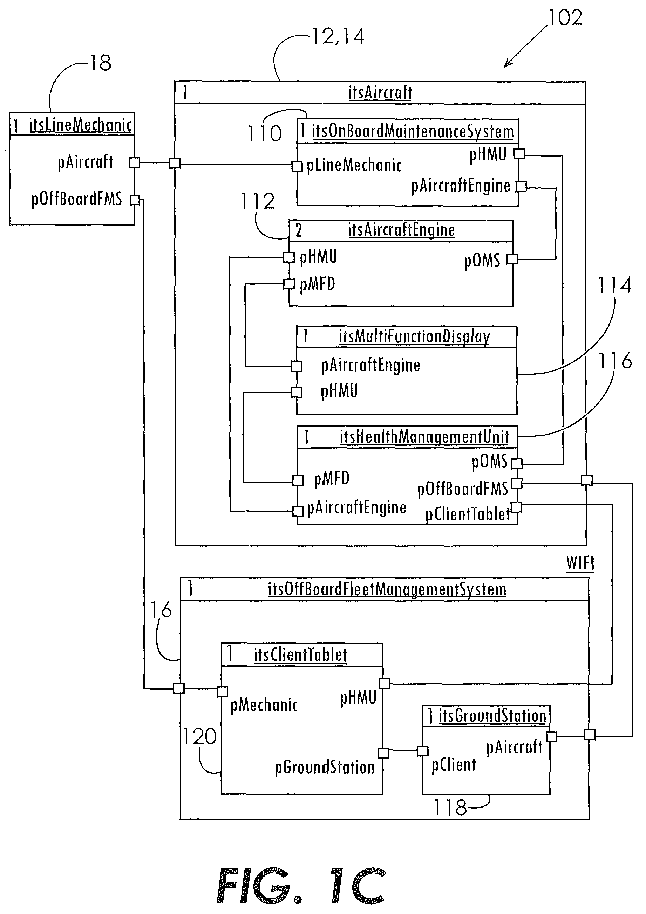

Referring now to Figure 1C, there is shown an architecture diagram displaying components of a system 102 for interactive aircraft maintenance procedures with a computing device according to at least one embodiment. As shown in Figure 1C, the system 102 includes a computing device 18, one or more aircraft components 12, 14, and a management system 16, similar to what is displayed in Figures 1A and Figures 1B. Figure 1C displays further sub-components of the system 102. For the one or more aircraft components 12, 14, the sub-components include an on-board maintenan ce system 110, an aircraft engine 112, a multi-function display 114, and a health management unit 116, according to an embodiment. For the management system 16, the sub-components include a client tablet 120 and a ground station 118 in an embodiment. As shown in Figure 1C, the computing device 18 may communicate directly with the management system 16 and the one or more aircraft components 12, 14.

In an exemplary embodiment, computing device 18 is a mobile computing device, connected via wireless network to management system 16 and configured to assist aircraft maintenance personnel in conducting interactive ground operations on the aircraft. The management system 16 is in communication with the one or more aircraft components 12, 14 and the sub-components, such as one or more controllers associated with the aircraft engine 112 and receives sensor and control status from the other installed devices, such as, for example, the multi-function display 114 and the health management unit 116. The management system 16 can be configured to provide input to the computing device 18 using sensor readings and timer settings received from the sub-components of the one or more aircraft components 12, 14. A user of the computing device 18, then, can use the computing device 18 display to guide his or her actions in performing interactive maintenance procedures (i.e, moving the throttle, etc.) and record results of the actions either directly on the computing device 18, paper, or otherwise.

It should be appreciated that using the combination of the management system 16 with the computing device 18 allows for rapid software development of software with rich interactive human interfaces. The computing device 18 can provide more flexible and informative displays than the current devices installed in the cockpit. By avoiding the devices installed in the cockpit, this system avoids the many limits to information flow between the cockpit devices and other aircraft devices.

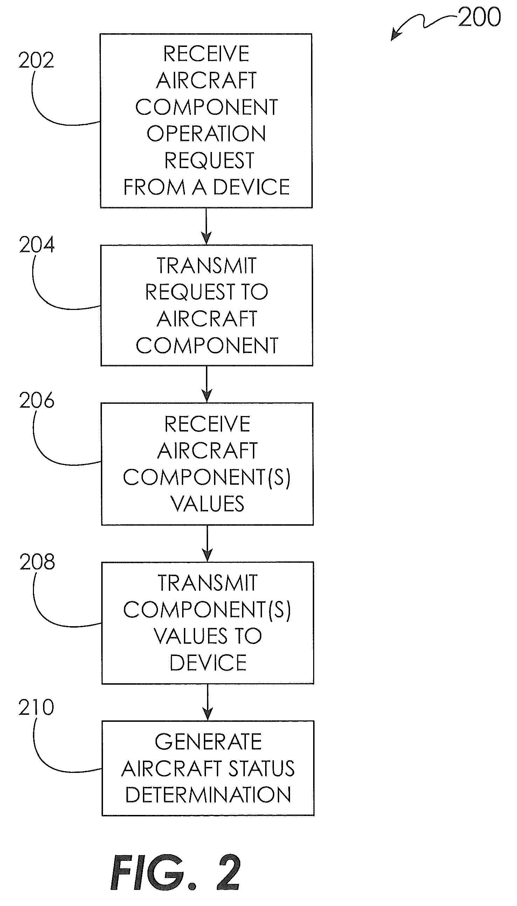

Referring now to Figure 2, there is shown a flowchart of a method 200 for interactive aircraft maintenance procedures using a computing device according to at least one embodiment. As shown in Figure 2, the method 200 includes receiving an aircraft component operation request in step 202, transmitting the request to an aircraft component in step 204, receiving aircraft component(s) values in step 206, transmitting component(s) values to the computing device 18 in step 208, and generating an aircraft status determination in step 210. It should be appreciated that the steps of method 200 may be executed in any order and at any time. It should further be appreciated that multiple steps of the method 200 may be executed contemporaneously (i.e. parallel computing).

According to at least one embodiment, the method 200 includes receiving an aircraft component operation request from a computing device 18 in step 202. The computing device 18 transmits an aircraft component operation request to the on-board maintenance system 110. As used herein, an aircraft component operation request may include, but is not limited to, a meter reading, an on/off request to the component, a change in a value for the component (i.e. throttle up/down), and others. It should be appreciated that an aircraft component operation request may include any command that can be issued to a component in an aircraft that is connected to a management system as discussed herein. For example, in the event that a technician is performing a power assurance check for an engine, an aircraft component operation request could be a temperature reading. In this example, an aircraft component operation request could also be an engine turn on command and a throttle up command, the steps often used to perform a power assurance check.

In at least one embodiment, the method 200 includes transmitting the aircraft component operation request to one or more aircraft components 12, 14. In such an embodiment, the aircraft component operation request is received at a management system 16 and directed to the appropriate aircraft components 12, 14 to perform the operation. For example, an aircraft component operation request requesting a temperature reading from a sensor associated with the aircraft engine 112 would be sent to the sensor.

In at least one embodiment, the method 200 includes receiving aircraft component value(s) from the one or more components 12, 14 in step 206. In response to receiving the aircraft component operation request, the one or more components responds with values requested or generated as a result of performing the aircraft component operation request to the management system 16. For example, if the aircraft component operation request is a temperature reading from a sensor associated with the aircraft engine 112, the value returned to the management system 16 would be a temperature value. In at least one embodiment, the component values returned to the management system 16 are transmitted to the computing device 18 by the management system 16 in step 208.

In at least one embodiment, the method 200 includes generating an aircraft status determination based on the values returned to the computing device 18 in step 210. In an embodiment, the values returned to the computing device 18 may be displayed to the operator directly on the computing device 18 (i.e. the computing device 18 may directly display a temperature). In other embodiments, the values may instead/also be entered into an equation to derive attributes related to the components and other known values, such as, for example, taking a temperature value from a component and adjusting it based on ambient temperature. In other embodiments, steps in the method 200 may be executed multiple times such that the computing device 18 holds multiple values from components that are combined together in an equation to derive attributes.

In other embodiments, the computing device may hold acceptable value limits for values and/or derived attributes, such as, for example, a minimum power assurance check (PAC) value. In such an embodiment, the computing device 18 may display a warning based on whether the derived attributes meet the acceptable limits.

The preceding description is exemplary rather than limiting in nature. A person of ordinary skill in this art may recognize certain variations and modifications to the disclosed examples that do not depart from the essence of this disclosure. For that reason, the following claims should be studied to determine the true scope of legal protection given to this disclosure.

The following clauses provide details of the disclosure which may or may not presently be claimed but which may serve as basis for future amendments or a divisional application.
1) A method for interactive aircraft maintenance procedures, comprising:
   receiving an aircraft component operation request from a computing device;
   transmitting the aircraft component operation request to one or more aircraft components;
   operating the one or more aircraft components in response to the transmitted aircraft component operation request;
   receiving one or more aircraft component values in response to the operating step; and
   generating at the computing device an aircraft status determination based on the received one or more aircraft component values.
2) The method of clause 1, wherein the transmitting step is performed by a management system connected to the computing device via a wireless network.
3) The method of clause 1, wherein the aircraft status determination is further based on one or more known values.
4) The method of clause 1, wherein the aircraft status determination is further based on one or more acceptable value limits for the one or more aircraft component values.
5) The method of clause 1, further comprising generating one or more derived attributes based at least in part on the one or more aircraft component values and one or more known values.
6) The method of clause 5, wherein the aircraft status determination is further based on the one or more derived attributes.
7) A method for interactive aircraft maintenance procedures, comprising:
   transmitting, from a computing device at a point of work, an aircraft component operation request to a management system on an aircraft;
   operating one or more aircraft components in response to the transmitted aircraft component operation request; and
   verifying the one or more aircraft components at the point of work using the computing device, wherein the management system on the aircraft sends information received from the one or more aircraft components to the computing device and the verifying is based on the information.
8) The method of clause 7, wherein the verifying comprises viewing reports about the one or more aircraft components displayed on the computing device.
9) The method of clause 7, wherein the verifying comprises combining the information with one or more known values at the computing device.
10) The method of clause 9, wherein the verifying further comprises assessing the information and the one or more known values against at least one acceptable value limit.
11) The method of clause 7, wherein the computing device and the management system communicate over a computer network.
12) The method of clause 11, wherein the computer network is a wireless network.
13) The method of clause 7, wherein the one or more aircraft components comprise a plurality of aircraft components.
14) An interactive aircraft component maintenance system, comprising:
   a computing device;
   a management system configured to:
      receive an aircraft component operation request from the computing device;
      transmit an operation request to at least one aircraft component; and
      receive one or more values associated with the at least one aircraft component to the management system.
15) The system of clause 14, wherein the management system is further configured to transmit the one or more values to the computing device.
16) The system of clause 15, wherein the computing device is further configured to generate an aircraft component status determination based at least in part on the one or more values.
17) The system of clause 16, wherein the computing device is further configured to generate the aircraft component status determination based at least in part on one or more known values.
18) The system of clause 14, wherein the management system and the computing device communicate over a computer network.
19) The system of clause 18, wherein the computer network is a wireless network.

## Claims

1. A method for interactive aircraft maintenance procedures, comprising:
receiving an aircraft component operation request from a computing device;
transmitting the aircraft component operation request to one or more aircraft components;
operating the one or more aircraft components in response to the transmitted aircraft component operation request;
receiving one or more aircraft component values in response to the operating step; and
generating at the computing device an aircraft status determination based on the received one or more aircraft component values.

2. The method of claim 1, wherein the transmitting step is performed by a management system connected to the computing device via a wireless network.

3. The method of claim 1 or 2, wherein the aircraft status determination is further based on one or more known values.

4. The method of claim 1, 2 or 3, wherein the aircraft status determination is further based on one or more acceptable value limits for the one or more aircraft component values.

5. The method of claim 1, 2, 3 or 4, further comprising generating one or more derived attributes based at least in part on the one or more aircraft component values and one or more known values; preferably wherein the aircraft status determination is further based on the one or more derived attributes.

6. A method for interactive aircraft maintenance procedures, comprising:
transmitting, from a computing device at a point of work, an aircraft component operation request to a management system on an aircraft;
operating one or more aircraft components in response to the transmitted aircraft component operation request; and
verifying the one or more aircraft components at the point of work using the computing device, wherein the management system on the aircraft sends information received from the one or more aircraft components to the computing device and the verifying is based on the information.

7. The method of claim 6, wherein the verifying comprises viewing reports about the one or more aircraft components displayed on the computing device.

8. The method of claim 6 or 7, wherein the verifying comprises combining the information with one or more known values at the computing device; preferably
wherein the verifying further comprises assessing the information and the one or more known values against at least one acceptable value limit.

9. The method of claim 6, 7 or 8, wherein the computing device and the management system communicate over a computer network; preferably
wherein the computer network is a wireless network.

10. The method of claim 6, 7, 8 or 9, wherein the one or more aircraft components comprise a plurality of aircraft components.

11. An interactive aircraft component maintenance system, comprising:
a computing device;
a management system configured to:
receive an aircraft component operation request from the computing device;
transmit an operation request to at least one aircraft component; and
receive one or more values associated with the at least one aircraft component to the management system.

12. The system of claim 11, wherein the management system is further configured to transmit the one or more values to the computing device.

13. The system of claim 12, wherein the computing device is further configured to generate an aircraft component status determination based at least in part on the one or more values.

14. The system of claim 13, wherein the computing device is further configured to generate the aircraft component status determination based at least in part on one or more known values.

15. The system of claim 11, 12, 13 or 14, wherein the management system and the computing device communicate over a computer network; preferably
wherein the computer network is a wireless network.
